# EUROPEAN PATENT APPLICATION

(11) **EP 1 096 374 A2**
(43) Date of publication of application: **02.05.2001**
(21) Application number: 00203748.9
(22) Date of filing: 27.10.2000
(51) Int. Cl.: G06F 9/445

(54) **Method and system for simultancous and unattended installation of software on a self-service financial transaction terminal**

(30) Priority: 01.11.1999 US 162815 P; 01.11.1999 US 163002 P
(71) Applicant: Citicorp Development Center, Inc., Los Angeles, California 90066 (US)
(72) Inventor: Klinedinst, John, Simi Valley, California 93063 (US); Christensen, Pallo Thy, Culver City, California 90230 (US)
(74) Representative: Hynell, Magnus

(57) **Abstract**

The present invention makes use of computer hardware and software to provide a simultaneous and unattended global installation method and system that provide initial installation of one or more common software components to a SSFT terminal. In an embodiment, the initial software installation manages, formats, and installs the initial software operating systems, applications, and other components to the SSFT terminal using installation scripts that provide unattended global installation. The installation process is itemized and prioritized using dependencies among software components and parameters associated with the SSFT terminal. Further, the global installation method and system control reboots of the SSFT terminal during installation.

In an embodiment, a table driven menu allows a user to select software components to install, enter pre-installation and configuration parameters, and initiate the automated installation of the selected software components. In another embodiment, a user can install a disk or CD into an operational SSFT terminal and a default selection of one or more common software components and pre-installation and configuration parameters are automatically loaded and automatically initiate the installation.

## Description

### PRIORITY APPLICATIONS

This application claims priority to co-pending US Provisional Application Serial No. 60/162,815 filed November 1, 1999, entitled "Method And System For Simultaneous And Unattended Installation Of Software On A Self-Service Financial Transaction Terminal (Global Installation Framework)," and is incorporated herein by reference.

This application claims priority to co-pending US Provisional Application No. 60/163,002, filed November 1, 1999, entitled "Method And System For Installing And/Or Upgrading Software On A Self-Service Financial Transaction Terminal From A Remote Computer (Remote Installation/Software Upgrade)," and is incorporated herein by reference.

### CROSS REFERENCE TO RELATED APPLICATIONS

This application relates to Attorney Docket No. CITI0198/T0091-195417, filed simultaneously, entitled "Method And System For Secure Communication Between A Self-Service Financial Transaction Terminal And A Remote Operator Interface," and is incorporated herein by reference.

This application relates to Attorney Docket No. CITI0197/T0091-195418, filed simultaneously, entitled "Method And System For Obtaining Device Services On A Self-Service Financial Transaction Terminal," and is incorporated herein by reference.

This application relates to Attorney Docket No. CITI0200/T0091-195419, filed simultaneously, entitled "Method And System For Installing And/Or Upgrading Software On A Self-Service Financial Transaction Terminal From A Remote Computer," and is incorporated herein by reference.

This application relates to Attorney Docket No. CITI0199/T0091-195421, filed simultaneously, "Method And System For Remote Operator Interface With A Self-Service Financial Transaction Terminal," and is incorporated herein by reference.

This application relates to Attorney Docket No. CITI0201/T0091-195422, filed simultaneously, entitled "Method And System For Coordinating Session Activities At A Self-Service Financial Transaction Terminal," and is incorporated herein by reference.

This application relates to Attorney Docket No. CITI0/T0091-195578, filed simultaneously, entitled "Method And System For Configuration Of Self-Service Financial Transaction Terminals For A Common Software Release," and is incorporated herein by reference.

This application relates to US Provisional Application No. 60/162,673, filed November 1, 1999, entitled "Method And System For Secure Communication Between A Self-Service Transaction Terminal And A Remote Operator Interface (Remote Operator Interface Security)," and is incorporated herein by reference.

This application relates to US Provisional Application No. 60/162,994, filed November 1, 1999, entitled "Method And System For Extensions For Financial Services Service Provider Framework For A Self-Service Transaction Terminal (XFS Service Provider Framework)," and is incorporated herein by reference.

This application relates to US Provisional Application No. 60/163,000, filed November 1,1999, entitled "Method And System Of Remote Operator Interface For A Self-Service Financial Terminal (Remote Operator Interface)," and is incorporated herein by reference.

This application relates to US Provisional Application Serial No. 60/162,816 filed November 1, 1999, entitled "Method And System For Coordinating Session Activities At A Self-Service Financial Transaction Terminal (ATM Session Manager)," and is incorporated herein by reference.

This application relates to US Provisional Application No. 60/162,672, filed November 1, 1999, entitled "Method And System For Configuration Of Self-Service Financial Terminals For A Common Software Release (Framework For Configuration Of Self-Service Financial Terminals)," and is incorporated herein by reference.

### COPYRIGHT NOTIFICATION

A portion of the disclosure of this patent document and its figures contain material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

### BACKGROUND OF THE INVENTION

### 1. Field of the Invention

The present invention relates generally to the field of self-service financial transaction terminals, such as automatic teller machines and financial terminals, and more particularly to a method and system for simultaneous and unattended installation of a plurality of software components on a self-service financial transaction terminal.

### 2. Background

Self-service financial transaction (SSFT) terminals, such as automated teller machines (ATMs), include computer applications or software running on computer hardware to display an interactive interface display, such as an ATM touch screen, and to interface with a user, a host computer, and other remote computers connected to the SSFT terminal over a network. Typically, a new SSFT terminal is shipped from the factory without any software on it, and the SSFT terminal may sit in a warehouse or depot for many months. Additionally, new software updates are released while the SSFT terminal is waiting to be placed in service. Therefore, the financial institution waits until the SSFT terminal is put into service before installing the initial software on the SSFT terminal.

Typically, what is done to install the software is to take a number of compact disks (CDs) and insert one in after the other in order to install the particular software that is located on that CD. The financial institution may have thousands of different modules and many different software components to install on the SSFT terminal before deployment. Accordingly, current industry practice is manually intensive, prone to a high number of errors, and requires a large amount of manpower to accomplish. Thus, a need exists for a global installation method and system to solve the above problems in a fast, reliable, and efficient manner. A need also exists for a global installation method and system that are able to: (1) accommodate additional SSFT terminals as the system expands; (2) operate on many different computer platforms and operating systems; and (3) operate with many different software applications.

### SUMMARY OF THE INVENTION

To overcome these problems, the present invention makes use of computer hardware and software to provide a global installation framework for SSFT terminals. The present invention provides a simultaneous and unattended installation method and system that provide initial installation of one or more software components for a SSFT terminal that is coupled with a global communications network. As used herein, the term "software component" includes software releases, updates, files, applications, operating systems, and other computer system identifiers.

In an embodiment, the initial software installation manages, formats, and installs the initial software operating systems, applications, and other components to the SSFT terminal using installation scripts that provide unattended global configuration parameters and installation. The installation process is itemized and prioritized using a table driven set-up that allows a user to select software components to install and that can be manually loaded at the SSFT terminal or can be remotely loaded onto the hard drive of the SSFT terminal. To install one or more software components to the SSFT terminal, individual installation scripts are executed to configure and install each software component.

In another embodiment, the installation process prompts a user for pro-installation parameters and for selection of one or more software components to install. In another embodiment, the installation is fully automated using default pro-installation parameters and a default selection of software components. Thus, for the automated installation procedure, a user only needs to insert the installation disk or CD into an operational SSFT terminal. Both the manual and automated pro-installation embodiments itemize and prioritize installation of one or more software components to the SSFT terminal so that dependencies among software components are used to guide the installation.

Further details on these embodiments and other possible embodiments of the present invention are set forth below. As is appreciated by those of ordinary skill in the art, the method and system of the present invention have wide utility in a number of areas as illustrated by the wide variety of the features and advantages discussed below.

It is a feature and advantage of the present invention to provide a method and system for simultaneous and unattended installation of a plurality of software components on a SSFT terminal, such as an ATM.

It is another feature and advantage of the present invention to provide a method and system for simultaneous and unattended installation of a plurality of software components on a SSFT terminal that associates the particular hardware and software components and installs the appropriate drivers and other configuration settings for the computer system of that SSFT terminal.

It is another feature and advantage of the present invention to provide a method and system for simultaneous and unattended installation of a plurality of software components on a SSFT terminal that is itemized and prioritized using a table driven method that enables selection of one or more software components to install or not to install.

It is another feature and advantage of the present invention to provide a method and system for simultaneous and unattended installation of one or more software components on a SSFT terminal that automatically accommodates dependencies or interdependencies between software components.

It is another feature and advantage of the present invention to provide a method and system for simultaneous and unattended installation of a plurality of software components on a SSFT terminal that automatically control reboots.

It is another feature and advantage of the present invention to provide a method and system that affords basic checks on simultaneous installations on multiple SSFT terminals.

It is another feature and advantage of the present invention to provide a flexible global installation framework that is capable of accommodating changes in the system architecture.

It is another feature arid advantage of the present invention to provide a global installation framework method and system that are capable of running on many different hardware platforms, operating systems, programming languages, software applications, and with other computer technology.

It is another feature and advantage of the present invention to make it easier for financial institutions (e.g., businesses, financial service providers, etc.) to accommodate growth in the number of installation activities.

It is another feature and advantage of the present invention to support various installation activities, including new installation activities as they evolve and are defined by the financial market.

It is another feature and advantage of the present invention to have a standardized installation interactive interface display used during manual installation for each SSFT terminal regardless of the computer system (i.e., the hardware platforms, operating systems, programming languages, software applications, and other computer technology).

It is another feature and advantage of the present invention to use diverse SSFT terminal communication devices (e.g., ATMs with different manufacturers and design specifications) to access and communicate with the global installation framework system.

It is another feature and advantage of the present invention to store, maintain, and manage installation activity data to the global communications network.

It is another feature and advantage of the present invention to provide for multiple levels of user access and to facilitate multiple levels of security related to those levels of user access.

It is another feature and advantage of the present invention to provide labor savings by automating and streamlining the simultaneous and unattended installation of a large number of software components.

It is another feature and advantage of the present invention to significantly reduce the time required by the overall process to coordinate and manage global SSFT terminal installation activities.

It is another feature and advantage of the present invention to allow a user to select a language (e.g., English, French, Spanish, German, etc.) to display installation information on a SSFT terminal, including data that is uploaded or downloaded by a user.

It is another feature and advantage of the present invention to provide a global installation method and system for a financial institution's communications network.

It is another feature and advantage of the present invention to provide a global installation method and system for a financial institution's ATM network.

These features and advantages may be accomplished singularly, or in combination, in one or more of the embodiments of the present invention.

Additional objects, uses, advantages, and novel features of this invention are set forth in the detailed description that follows and will become more apparent to those skilled in the art upon examination of the following or by practice of the invention.

### BRIEF DESCRIPTION OF THE FIGURES

Other objects, uses, advantages, and novel features of the present invention are more clearly understood by reference to the following description taken in connection with the accompanying figures, in which:
FIG. 1 is an overview of the global SSFT terminal software installation framework in an embodiment of the present invention.
FIG. 2A-2B depict a table of steps used for the manual global SSFT terminal software installation procedure in an embodiment of the present invention.
FIG. 3 is a representation of the installation scripts used for the global SSFT terminal software installation framework in an embodiment of the present invention.

### DETAILED DESCRIPTION

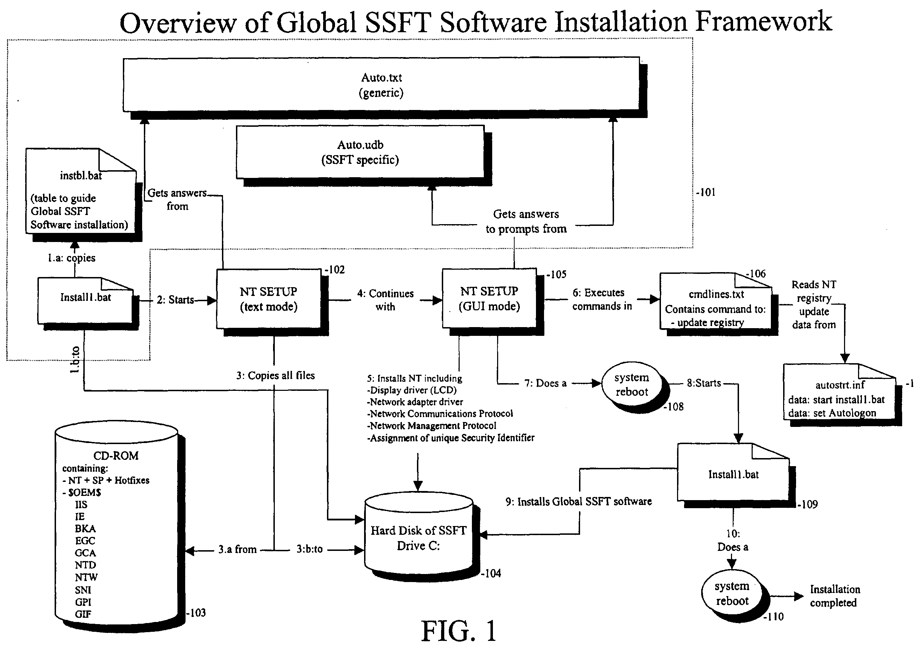

Referring now to an embodiment of the present invention, Figure 1 represents an overview of the method and system that provide a global installation framework for simultaneous and unattended installation of many different software components on a SSFT terminal, such as an ATM. Figure 1 represents an overview that addresses global SSFT terminal installation in two areas. One area is setting the initial installation parameters to install the software components on the SSFT terminal 101. The second area is actually installing the software components to the SSFT terminal's computer system 102, 103, 104, 105, 106, 107, 108, 109, and 110.

In an embodiment, initial installation is done either on site or in the depot where one cloning system is installed, and that cloning system is the same hardware configuration as the computer system of the SSFT terminal. The cloning system duplicates the hard drive of an SSFT terminal, and each duplicated hard drive is simply installed in each SSFT terminal, which streamlines the installation process and takes a brief amount of time, for example, only about 15 minutes to install the hard drive with all of the loaded software components. When the SSFT terminal is brought on-line, all of the software components are already installed. This is done when the SSFT terminal is initially put into service.

In another embodiment, depending upon what region or country in which the SSFT terminal is put into service, the software components may be installed in the depot, for example, by installing one master disk in the depot and then duplicating that disk to a number of other hard drives and simply installing the hard drives. Alternatively, if there are a limited number of installations, such as only five installations, for example, in a small European country where only five SSFT terminals are located, the software may be installed on site where the five SSFT terminals are physically located.

An embodiment of the present invention provides a method and system for initially installing the financial institution's software on the SSFT terminal that can be upgraded at a later time, for example, from a remote computer. Remotely upgrading the software on the SSFT terminal comes into play after the initial installation. In order to remotely install and/or upgrade the software on the SSFT terminal, it is necessary to initially install software on the SSFT terminal that can interact or interface with the remote computer in order to facilitate downloading of the upgraded software and upgrading the SFFT terminal software.

In an illustrative embodiment, a totally non-functioning ATM, as it is shipped from the factory, is to be deployed locally at a branch of the financial institution. The first thing to be done is to install all of the financial institution's ATM software on the ATM. That can be done simply by putting an already installed disk in the ATM processor. In this case, the software was installed in a depot or on the disk at a depot using the global installation framework. Another option is to run the global installation framework directly on the local ATM.

The method and system, for another embodiment, eliminate the use of multiple CDs, excessive personnel and unnecessary time by packaging the software and providing the framework for the initial installation of the software on the SSFT terminal. For example, the initial installation may involve thousands of modules spread over many different software components. This embodiment takes all of the financial institution's software components and puts them on a single CD, that basically serves as the starting point of the whole installation.

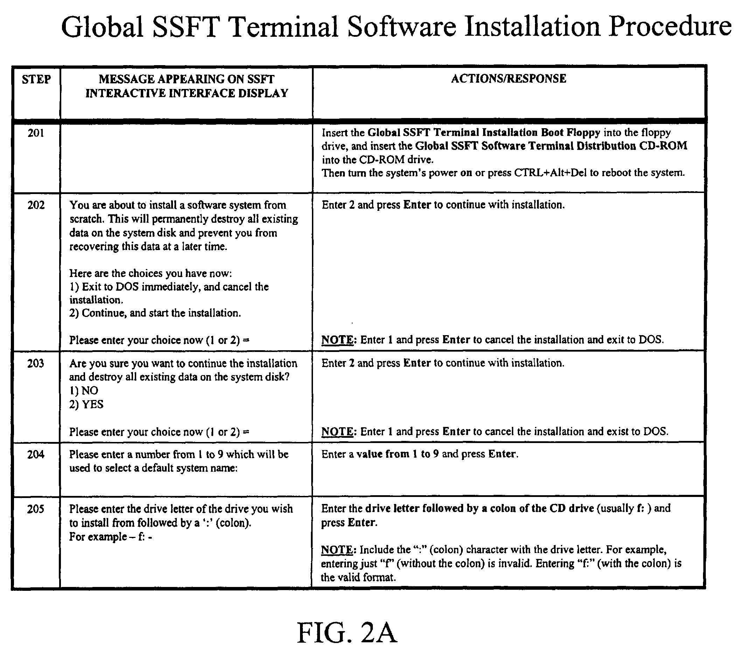

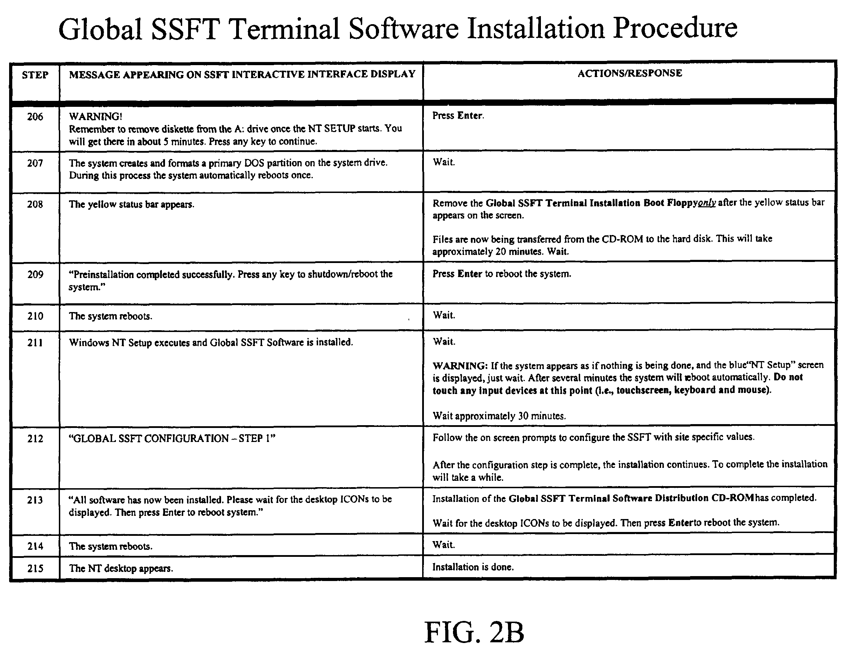

In an embodiment, a manual installation procedure prompts a user for pre-installation and configuration parameters as set forth in Figures 2A and 2B to prepare the SSFT terminal for global installation. After the SSFT terminal is ready for installation, individual installation scripts are executed and install each of the associated software components. In another embodiment, the installation procedure is fully automated and default pre-installation and configuration parameters are used to automatically prepare the SSFT terminal and to initiate all of the installation scripts.

Referring now in detail to Figures 2A and 2B, a user is able to control the preinstallation and configuration procedure used in an embodiment of the global SSFT terminal installation. Initially, a user installs a boot floppy and/or inserts a software distribution CD into the SSFT terminal and turns on the power to reboot the SSFT terminal 201. The user then receives a message on the interactive interface display of the SSFT and decides whether to continue with the installation 202. To continue with installation, a user receives another message that indicates that installation will destroy all existing data on the system disk and a user confirms whether to proceed with installation 203. Next, a default system name is selected 204. Thereafter, one of the SSFT drives is selected to install the software 205. A user is then given a warning to remove the disk from the SSFT terminal once the NT SETUP starts 206. Next, a DOS partition is created and formatted on the hard drive of the SSFT terminal and the SSFT terminal automatically reboots 207. A yellow status bar appears and the boot disk is removed so that software components (including files) are transferred from the CD to the hard disk of the SSFT terminal 208. The system indicates that pre-installation is complete 209 and then reboots the SSFT 210. Then, the NT Setup is executed and the global SSFT terminal software components are installed 211. A user follows the screen prompts to configure the SSFT terminal and the installation continues 212. The interactive interface display then indicates that all of the software components are installed 213. Finally, the SSFT terminal reboots 214, and the installation is completed when the NT desktop appears on the interactive interface display 215.

In an embodiment, the CD contains, for example, an operating system, such as Windows NT, other third-party software, and all of the software components that has been developed by the financial institution, on a single CD. An embodiment of the present invention makes use of a floppy disk that basically has a few commands that format the hard drive, and then it starts the installation, for example, of the NT operating system and all other software on the CD. The procedure is that an operator puts the CD into SSFT terminal, if a local installation is done, or if it is done remotely at a depot, there is a cloning system at the depot, and the operator inserts the floppy disk and boots from the floppy disk into DOS mode to automatically install.

The financial institution may run its global SSFT terminals on a number of hardware platforms, including, for example, its own platform and/or the hardware platforms, of various vendors, such as NCR, Siemens, Fujitsu, and Diebold. The financial institution's hardware platform, as well as each of the vendors' platforms, has its own platforms, operating systems, and computer applications associated with the SSFT terminal which it manufactures and is different for each SSFT terminal. Therefore it is necessary to install the proper network driver, the proper display driver, and the proper sound card associated with the hardware platform of the SSFT terminal.

A network card is used so that the SSFT terminal can connect up to a remote site. A sound card is used for all of the SSFT terminal sounds, and the display driver is used for the various interactive interface displays, such as a touch screens or simply a regular display on a ATM. Each vendor has its own interactive interface display, and a specific driver is needed for each of these. In another embodiment, the framework recognizes and knows upon what hardware platform it is installing, and it installs the correct network driver, display driver, and sound driver according to the platform.

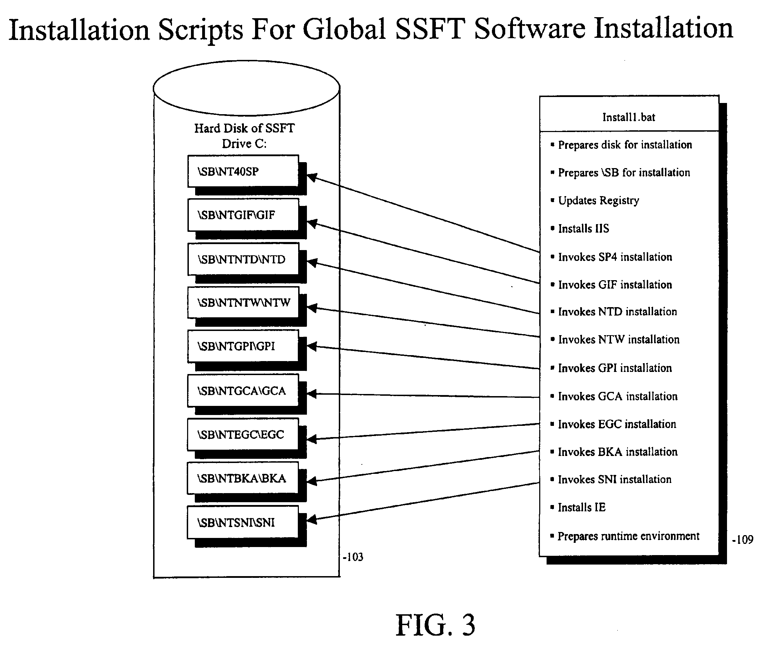

Referring now to Figure 3 represents a more detailed embodiment of the present invention that identifies the software components 109 installed to a softwarebank on the hard drive of the SSFT terminal 103. The software components are installed using installation scripts that (1) prepare the hard disk of the SSFT terminal for installation; (2) prepare the softwarebank directory of the SSFT terminal for installation; (3) update the local registry, such as the NT Registry; (4) install an Internet information server; (5) invoke an associated service pack with the Internet information server; (6) install one or more separate applications software components associated with the global communications network, the delivery system, the SSFT terminal, the business system, administrative components, platform parameters (e.g., drivers associated with a particular SSFT terminal), and other components; (7) install a graphical browser; and (8) prepare the runtime environment of the SSFT.

In an embodiment, the financial institution's global SSFT software components 109 may consist of Internet related third-party applications, such as the Microsoft components, IIS, IE, ASP, database related applications, such as ODBC and DAO, and a manager that interfaces the financial institution's infrastructure with a vendor's hardware infrastructure, such as WOSA XFS Manager. So, for example, if the financial institution's software needs to talk to a cash dispenser, it goes through a manager, such as the WOSA XFS Manager, which is a standard that has been in existence for several years. XFS is the financial services extension to the WOSA specification.

In another embodiment, the financial institution can install some security controls between the SSFT terminal and the communications network, such as security drivers that secure its data that flows on the communication lines, as well as other third-party software. Once all of this third-party software has been installed, a software platform is available to install the software components developed by the financial institution, and is basically all of the application infrastructures and screens, and which includes, for example, systems for monitoring and managing the SSFT terminal.

Another embodiment provides a method and system for simultaneous and unattended installation of a plurality of software components, such as the monitoring and managing software, generic applications, regional specific applications, operator interfaces, and the like. In addition, the whole framework for an embodiment of the present invention is table driven. Thus, the operator can elect, for example, not to install certain components. For example, if for some reason the component is not needed, the operator can take that component out of the table, and the framework will not install that component.

In another embodiment, in certain cases, the operator may not need or want to install certain vendor specific applications. For example, if the operator is dealing with a Diebold system or platform, the operator does not want to install some NCR components, and that is controlled in the table for an embodiment of the present invention. The table is located on the floppy drive from which the operator booted up. Therefore, the operator does not have to go in and change the CD on which the global SSFT terminal software was distributed. Thus, the operator can basically install the software on any number of hardware platforms, such as the five example hardware platforms supported in the global SSFT terminal infrastructure.

In another embodiment, all of the software installation is performed totally unattended. In some cases, the third-party software allows for an unattended installation, but in most cases it does not. Typically, the manner in which third-party software is installed requires considerable user interaction, such as the operator clicking to agree to some sort of agreement, to specify in what directory the operator wants to install the software, and the like, depending upon the particular software. An embodiment of the present invention automates all of the installation of the third-party software. Basically, the operator can walk away after he or she starts the installation. For example, the operator can walk away for two hours, and when the operator returns, all of the software components are installed.

In addition, the framework for an embodiment of the present invention handles installation dependencies and/or interdependencies. For example, one software component may have to be installed before another component can be installed, and that dependency or interdependency between the components is all handled within the framework.

In another embodiment, the framework handles all of the rebooting during the installation. Typically, when third-party software is installed, in order for that software to actually start running on the SSFT terminal, the system must be rebooted. The financial institution cannot allow the third-party software installer to simply reboot the financial institution's system, because the financial institution loses control in such case.

Therefore, for all the third-party software that requires a reboot, an embodiment provides a way to control that reboot, and whenever the framework for an embodiment of the present invention is ready for a reboot, then the framework will reboot. After the reboot, the framework again has control and continues the installation. Thus, during the installation of thousands of files, there can be, for example, seven reboots in order to get everything installed on the SSFT terminal.

The foregoing description and associated figures detail only illustrative examples of the environment in which the invention can be used and are not intended to be limiting. For instance, the operating system for the present invention is preferably Microsoft's Windows NT but may alternatively operate on other operating systems, such as a Macintosh, UNIX, or LINUX operating systems. Further, the programming languages, software platforms, operating systems, hardware components, communications protocols, and other technology mentioned in the foregoing description are by way of example only, and the present invention may always be enhanced to incorporate the most advanced available technology. Numerous modifications and adaptations thereof will be readily apparent to one skilled in the art, and the above disclosure is intended to cover all such modifications and equivalents.

## Claims

1. A platform-independent installation method for a self-service financial transaction terminal, comprising:
accessing said self-service financial transaction terminal;
identifying self-service financial transaction terminal parameters, wherein said self-service financial transaction terminal parameters comprise one or more of the following:
configuration parameters,
hardware parameters,
local operating parameters,
remote operating parameters,
network parameters,
communication parameters,
delivery system parameters, and
business parameters;
selecting a software component to install on said self-service financial transaction terminal;
automatically configuring said self-service financial transaction terminal using said self-service financial transaction terminal parameters and said software component; and
installing said software component.

2. The method of claim 1, further comprising:
using said self-service financial transaction terminal parameters to control said installation.

3. The method of claim 1, further comprising:
controlling reboots of said self-service financial transaction terminal associated with said installation.

4. The method of claim 1, wherein said installation is transparent to a user using said self-service financial transaction terminal.

5. The method of claim 1, wherein said configuration parameters comprise one or more of the following:
a network adapter driver;
a display driver;
a network communications protocol;
a network management protocol;
a unique security identifier; and
a sound driver.

6. The method of claim 1, further comprising:
selectively updating said self-service financial transaction terminal parameters associated with said installation of said software component; and
selectively managing said self-service financial transaction terminal parameters associated with said installation of said software component.

7. The method of claim 1, further comprising:
monitoring said installation of said software component.

8. The method of claim 1, further comprising:
executing installation scripts to control unattended and simultaneous installation of one or more of said software components on said self-service financial transaction terminal.

9. The method of claim 1, wherein said installation is performed at the same site as said self-service financial transaction terminal.

10. The method of claim 1, wherein said installation is remotely performed at a remote site from the physical location of said self-service financial transaction terminal.

11. The method of claim 10, wherein said remote site is a cloning depot.

12. The method of claim 1, wherein said software component is installed upon initialization of said self-service financial transaction terminal.

13. The method of claim 1, wherein said software component is subsequently installed on said self-service financial transaction terminal after initialization.

14. The method of claim 1, wherein said self-service financial transaction terminal comprises an ATM terminal.

15. The method of claim 1, wherein said self-service financial transaction terminal comprises an home banking terminal.

16. The method of claim 1, wherein said self-service financial transaction terminal comprises a staff terminal used within a financial institution.

17. The method of claim 1, wherein said self-service financial transaction terminal comprises an electronics communications device.

18. The method of claim 17, wherein said electronics communications device comprises one of the following:
a personal computer;
a screen telephone;
a personal data assistant; and
an interactive television.

19. The method of claim 1, wherein said self-service financial transaction terminal is coupled with at least one communications network having a plurality of nodes interconnected with communication lines.

20. The method of claim 19, further comprising:
selectively updating said network parameters associated with said installation; and
selectively managing said network parameters associated with said installation.

21. The method of claim 19, wherein said communications network is a financial institution's communications network.

22. A platform-independent installation system for a self-service financial transaction terminal, comprising:
means for accessing said self-service financial transaction terminal;
means for identifying self-service financial transaction terminal parameters, wherein said self-service financial transaction terminal parameters comprise one or more of the following:
configuration parameters,
hardware parameters,
local operating parameters,
remote operating parameters,
network parameters,
communication parameters,
delivery system parameters, and
business parameters;
means for selecting a software component to install on said self-service financial transaction terminal;
means for automatically configuring said self-service financial transaction terminal using said self-service financial transaction terminal parameters and said software component; and
means for installing said software component.

23. The system of claim 22, further comprising:
means for using said self-service financial transaction terminal parameters to control said installation.

24. The system of claim 22, further comprising:
means for controlling reboots of said self-service financial transaction terminal associated with said installation.

25. The system of claim 22, wherein said installation is transparent to a user using said self-service financial transaction terminal.

26. The system of claim 22, wherein said configuration parameters comprise one or more of the following:
a network adapter driver;
a display driver;
a network communications protocol;
a network management protocol;
a unique security identifier; and
a sound driver.

27. The system of claim 22, further comprising:
means for selectively updating said self-service financial transaction terminal parameters associated with said installation of said software component; and
means for selectively managing said self-service financial transaction terminal parameters associated with said installation of said software component.

28. The system of claim 22, further comprising:
means for monitoring said installation of said software component.

29. The system of claim 22, further comprising:
means for executing installation scripts to control unattended and simultaneous installation of one or more of said software components on said self-service financial transaction terminal.

30. The system of claim 22, wherein said installation is performed at the same site as said self-service financial transaction terminal.

31. The system of claim 22, wherein said installation is remotely performed at a remote site from the physical location of said self-service financial transaction terminal.

32. The system of claim 31, wherein said remote site is a cloning depot.

33. The system of claim 22, wherein said software component is installed upon initialization of said self-service financial transaction terminal.

34. The system of claim 22, wherein said software component is subsequently installed on said self-service financial transaction terminal after initialization.

35. The system of claim 22, wherein said self-service financial transaction terminal comprises an ATM terminal.

36. The system of claim 22, wherein said self-service financial transaction terminal comprises an home banking terminal.

37. The system of claim 22, wherein said self-service financial transaction terminal comprises a staff terminal used within a financial institution.

38. The system of claim 22, wherein said self-service financial transaction terminal comprises an electronics communications device.

39. The system of claim 38, wherein said electronics communications device comprises one of the following:
a personal computer;
a screen telephone;
a personal data assistant; and
an interactive television.

40. The system of claim 22, wherein said self-service financial transaction terminal is coupled with at least one communications network having a plurality of nodes interconnected with communication lines.

41. The system of claim 40, further comprising:
means for selectively updating said network parameters associated with said installation; and
means for selectively managing said network parameters associated with said installation.

42. The system of claim 40, wherein said communications network is a financial institution's communications network.

43. A platform-independent installation method for a self-service financial transaction terminal, comprising:
accessing said self-service financial transaction terminal;
identifying self-service financial transaction terminal parameters, wherein said self-service financial transaction terminal parameters comprise one or more of the following:
configuration parameters,
hardware parameters,
local operating parameters,
remote operating parameters,
network parameters,
communication parameters,
delivery system parameters, and
business parameters;
selecting a plurality of software components to install on said self-service financial transaction terminal;
automatically configuring said self-service financial transaction terminal using said self-service financial transaction terminal parameters and said plurality of software components; and
installing said plurality of software components.

44. The method of claim 43, further comprising:
simultaneously installing said plurality of software components.

45. The method of claim 44, further comprising:
prioritizing installation of said plurality of said software components.

46. The method of claim 45, further comprising:
using dependencies between said plurality of said software components to prioritize said installation.

47. The method of claim 45, further comprising:
using said self-service financial transaction terminal parameters to prioritize said installation.

48. A platform-independent installation system for a self-service financial transaction terminal, comprising:
means for accessing said self-service financial transaction terminal;
means for identifying self-service financial transaction terminal parameters, wherein said self-service financial transaction terminal parameters comprise one or more of the following:
configuration parameters,
hardware parameters,
local operating parameters,
remote operating parameters,
network parameters,
communication parameters,
delivery system parameters, and
business parameters;
means for selecting a plurality of software components to install on said self-service financial transaction terminal;
means for automatically configuring said self-service financial transaction terminal using said self-service financial transaction terminal parameters and said plurality of software components; and
means for installing said plurality of software components.

49. The system of claim 48, further comprising:
means for simultaneously installing said plurality of software components.

50. The system of claim 49, further comprising:
prioritizing installation of said plurality of said software components.

51. The system of claim 50, further comprising:
using dependencies between said plurality of said software components to prioritize said installation.

52. The system of claim 50, further comprising:
using said self-service financial transaction terminal parameters to prioritize said installation.
